(19) **Europäisches Patentamt European Patent Office Office européen des brevets**

(11) **EP 1 573 537 B1**

(12) **EUROPEAN PATENT SPECIFICATION**

(45) Date of publication and mention
of the grant of the patent:
**17.12.2008 Bulletin 2008/51**

(51) Int Cl.:
***G06F 9/48*** (2006.01)

(21) Application number: **03758553.6**

(22) Date of filing: **31.10.2003**

(86) International application number:
**PCT/IB2003/004938**

(87) International publication number:
**WO 2004/051460 (17.06.2004 Gazette 2004/25)**

(54) **PULL SCHEDULING OF SOFTWARE COMPONENTS IN HARD REAL-TIME SYSTEMS**

ABFRAGE-ZEITSTEUERUNG VON SOFTWAREBAUSTEINEN IN HARD-ECHTZEIT-SYSTEMEN

ORDONNANCEMENT DES EXTRACTIONS DE COMPOSANTS LOGICIELS DANS DES SYSTÈMES TEMPS-RÉEL À CONTRAINTES STRICTES

(84) Designated Contracting States:
**AT BE BG CH CY CZ DE DK EE ES FI FR GB GR HU IE IT LI LU MC NL PT RO SE SI SK TR**

(30) Priority: **03.12.2002 EP 02080058**

(43) Date of publication of application:
**14.09.2005 Bulletin 2005/37**

(73) Proprietor: **Koninklijke Philips Electronics N.V.**
**5621 BA Eindhoven (NL)**

(72) Inventors:
• **DE BUNJE, Albertina**
**NL-5656 AA Eindhoven (NL)**
• **DEKKER, Simon, T.**
**NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
**US-A1- 2002 112 097**

• **HERRTWICH R G ED - INSTITUTE OF ELECTRICAL AND ELECTRONICS ENGINEERS: "Time capsules: an abstraction for access to continuous-media data" PROCEEDINGS OF THE REAL TIME SYSTEMS SYMPOSIUM. LAKE BUENA VISTA, DEC. 5 - 7, 1990, WASHINGTON, IEEE. COMP. SOC. PRESS, US, vol. SYMP. 11, 5 December 1990 (1990-12-05), pages 11-20, XP010022032 ISBN: 0-8186-2112-5**
• **LEATHRUM J F ET AL: "Modelling heterogeneous processor scheduling for real-time systems" ROBOTICS AND COMPUTER INTEGRATED MANUFACTURING, ELSEVIER SCIENCE PUBLISHERS BV., BARKING, GB, vol. 11, no. 2, June 1994 (1994-06), pages 91-98, XP004011780 ISSN: 0736-5845**
• **KOROUSIC-SELJAK B: "TASK SCHEDULING POLICIES FOR REAL-TIME SYSTEMS" MICROPROCESSORS AND MICROSYSTEMS, IPC BUSINESS PRESS LTD. LONDON, GB, vol. 18, no. 9, 1 November 1994 (1994-11-01), pages 501-511, XP000483414 ISSN: 0141-9331**

**Description**

The invention relates to a method of scheduling software components in a hard real time system for processing time dependent streams of data elements. The invention further relates to a hard real time system for processing time dependent streams of data elements.

In real-time software systems where the number of software components is greater than the number of available processors, software components compete for processing time, and scheduling of software components is required reliably and fast. In the present context, any software system in which the time, at which an output is produced is essential, is referred to as a real-time software system. The lag from the input time of a real-time software system to its output time, i.e. the delay, must be sufficiently small for acceptable timeliness. A hard real-time software system has to respond to an externally generated input within a bounded time interval. A software system in the present context is typically constructed from a number of interconnected software components and the only interaction between software components is through their interfaces, software components do not share state information.

In this kind of system, a scheduler assigns processing intervals to the software components in such a way that the real-time constraints on system level are met. The scheduling of software components consists of two phases that are repeated continuously over time. First, the set of schedulable software components is determined and then, from this set and according to some prioritization scheme, a subset of software components is selected that will actually be executed on the processors (one software component is executed on each processor).

A number of prioritization schemes is known.

- **Round Robin Scheme** - A snapshot is made of the set of schedulable software components. This set is arbitrarily ordered and the software components are selected one by one. After all schedulable software components are served, the set of schedulable software components is updated.

- **Fixed Priority Scheme -** Each software component will have a certain fixed priority. From the set of schedulable software components the software component with the highest priority is chosen. Next, the set of schedulable software components is updated, and from this new set the software component with the highest priority is chosen, and so on.

- **Flexible Priority Scheme -** Each software component will get a priority that might change over time. From the set of schedulable software components the software component is chosen with the highest priority at that time. Next, the set of schedulable software components is updated and the priorities of the software components are re-computed. From this new set, the software component with the highest priority is chosen, and so on.

- **Priority-based Pre-emptive Scheduling** - This approach to scheduling can be combined with fixed or flexible priorities. When a software component with higher priority becomes schedulable during the processing of a software component with a lower priority, the processing of the latter software component can be interrupted to serve the software component with a higher priority first.

- **Pipeline or Push Scheduling -** The sources of the directed graph of software components are arbitrarily ordered. The schedulable sources are treated one by one, but after each step the schedulable set is updated, and the data is pushed as far as possible through the graph. When no software component can be scheduled anymore due to the processing of the source, the next schedulable source is treated.

The problem considered here is to find an effective prioritization scheme that makes an optimal choice of a schedulable software component from the set of schedulable software components. By optimal is meant a minimal port-to-port delay.

US2002/0062435 describes a multi-streaming processor with a multiple of streams for processing a multiple of threads, and an instruction scheduler with a priority record of priority codes for one or more of the streams. The priority codes determine in some embodiments relative access to resources as well as which stream has access at any point in time. In other embodiments, priorities are determined dynamically and altered on-the-fly, which may be done by various criteria, such as on-chip processing statistics, by executing one or more priority algorithms, by input from an off-chip according to stream loading, or by combinations of these.

US 6,195,701 describes a method for synchronization and scheduling of multiple data streams and real time tasks. A schedule criterion is determined by a trigger condition, e.g. in terms of the state of the streaming processes. Such state is then again related to time marks of the streams and the system time. This document does not solve the problem of executing streaming and control of streaming using one processor by performing scheduling of software components.

US 7,140,016 describes a framework for real-time media applications on an applications processor in communication with an algorithm processor, comprising a plurality of plug-ins for a real-time media application, a plurality of first algorithm components, a component scheduler providing quality of service for said application, with regard to said components by components scheduling in response to controls from said plug-ins and notification of events related to execution of said components and an applications processor scheduler to determine deadlines for a media stream that can be scheduled on said algorithm processor, and wherein said component scheduler on said other with processor schedules a frame at a time of said media stream.

The following publications provide further technical background: "time capsules: an abstraction for access to continuous media data", proceedings of the real-time systems symposium, December 5-7, 1990, Washington, IEEE Comp.Soc.Press, vol SYMP. 11, p11-20; "Modelling heterogenous process scheduling for real-time systems", by Leathrum J.F. et al, in Robotics and Computer Integrated Manufacturing, Elsevier Science Publishers, volume 11, number 2, June 1994, pages 91-98; and "Task scheduling policies for real-time systems", by Korousic-Seljak B, in Microprocessors and Microsystems, IPC Business Press Ltd., London, volume 18, number 9, 1 November 1994, pages 501-511.

Meanwhile, it is found that the above-described data handling does not comply with the highest output rate available for a system. Prior art may typically allocate processing resources available to data next in a data queue. That means if two data streams assigned with equal processing priority in a processing pipeline await processing resources, the data stream first in line is processed as the first. This may in some applications be inconvenient, as a processing operation in a processing tree structure may be locked for a considerable amount of time before output is generated. This inconvenience may escalate considerably with the depth of the processing tree.

It is an object of the invention to provide a method for scheduling, suitable for achieving hard real time operation of a system and solving the problems mentioned above.

This is obtained by a method of scheduling schedulable software components in a hard real time system for processing time dependent streams of data elements, where the number of schedulable software components is larger than the number of available processors for processing said software components and where each of said software components have at least one input and one output characterized in that the method comprises the steps of consecutively:

- determining for each schedulable software component the earliest time on which said software component can contribute to the output of said hard real time system,
- scheduling the schedulable software component that can contribute to the output of said real time system at the earliest of the earliest times.

This implies that no processing time is spent to schedulable software components that do not contribute to the production of output, if there are schedulable software components that do contribute to the output.

In an embodiment scheduling of said number of software components is performed using push scheduling, if a number of schedulable software components contribute to the output of said real time system at the same earliest of the earliest times. Push scheduling introduces less context switches in this case than other ways of scheduling. Minimizing context switches also supports low port-to-port delays.

In another embodiment a predefined time interval is specified for each software component and a software component is schedulable when all time stamped data elements from a predefined time interval of said time dependent stream of time stamped data element is available at all inputs of said software component. Combination with timebox-scheduling allows for determining the earliest contribution to output in a way, which is easy to re-compute.

In a specific embodiment the availability of said predefined time interval of said time stamped data elements is determined by defining a begin time and an end time of said predefined time interval and checking whether the most recent time stamped element processed by a preceding software component is newer than the end time of said predefined time interval. This allows for an easy way to check if a software component is schedulable.

In an embodiment the step of determining the earliest time, on which said software component can contribute to the output, is performed by:

- identifying possible paths of subsequent software components that the data elements have to be processed by in order to reach the output of said system from said software component,
- determining an earliest contribution time for each possible path by subtracting from the begin time of said predefined time interval, the length of each of the predefined time intervals specified for each of said subsequent software components in said path.
- determining the earliest time on which said software component can contribute to the output as the earliest determined contribution time.

This is a way to define 'earliest contribution' in a way that does not give preference to any output, or any path to reach an output.

In a specific embodiment the step of determining the earliest time on which said software component can contribute to the output is performed by:

- identifying a path of subsequent software components that the data elements have to be processed by in order to reach the output of said system from said software component,
- determining an earliest contribution time for each possible path by subtracting from the begin time of said predefined time interval, the length of each of the predefined time intervals specified for each of said subsequent software components in said path, where at least some of said predefined time intervals have been subtracted a displacement value.
- selecting the earliest time on which said software component can contribute to the output as the earliest determined contribution time.

This allows for an easy way to decide which schedulable software component can contribute to an output at the earliest point in time, in case displacements are used to force the data flow through the system.

The invention also relates to a hard real time system for processing time dependent streams of data elements, said system comprising a number of software components and a number of processors for processing software components, said number of software components is larger than the number of processors, each of said software components having at least one input and at least one output, said system comprises means for determining for each schedulable software component the earliest time on which said software component can contribute to the output of said hard real time system, and means for scheduling the schedulable software component that can contribute to the output of said real time system at the earliest of the earliest times.

The present invention can be used in real-time systems such as, video and audio processing systems in the processed (MPEG2, MPEG4) and unprocessed domain. Further real-time system could be image processing, image recognition, industrial automation, pattern recognition and radar and telecommunication.

In the following, preferred embodiments of the invention will be described referring to the figures, wherein

Figure 1 illustrates a connector between two software components,
Figure 2 illustrates in general steps the process of defining scheduleability of software components and executing a scheduled software component,
Figure 3 is a flow diagram illustrating how it is decided whether it is possible to assign a current time box for a specific software component,
Figure 4 illustrates displacement of the current time box for each connector,
Figure 5 illustrates how the scheduler uses the time-boxes when determining scheduleability of software components,
Figure 6 illustrates a hard real time system being used for explaining the scheduling of schedulable software components,
Figure 7a - 7g illustrate the step by step scheduling of the software component in the system of figure 6.

In the following the present invention will be described being used for time box driven scheduling of software software components in hard real-time systems for stream processing. First, time box driven scheduling will be described and this will be followed by a description of how the schedulable software components can be scheduled according to the present invention.

A system is an apparatus performing a certain task where the way in which it performs this task can be influenced by management and control. In a preferred embodiment the certain task will be restricted to a hard real-time processing of streaming data. A software component is a self-contained part of the system, performing a sub-task that is 'atomic', i.e. it is considered not to be useful to subdivide the sub-task any further. The motivation for dividing sub-tasks further or not, is based on experience in the application domain of remultiplexers, encoders and alike. A time stamped data element is a representation of data in a stream. It is supposed that streaming data has data contents and time information. This time information is used to order the elements and to relate the data to time. A time-box is a predefined time interval of time stamped data elements.

Within the system according to the present invention, algorithmic time is used. At the end, the time information generated for the output streams is related to real time again. The conversion from system time to algorithmic time could e.g. be performed by a conventional time filter placed at the system input and system output.

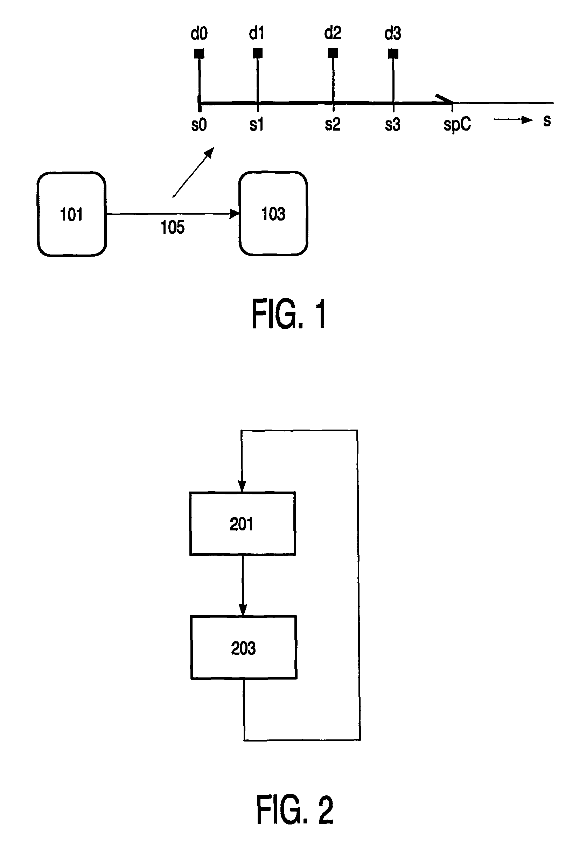

Figure 1 illustrates a connector between two software components; the connector is a self-contained part of the system. A source software component 101 is connected to a sink software component 103, by a connector 105. The dynamic state of a connector 105 consists of a number of elements on the connector 105 comprising the data elements and the produced-until time $sp_C$ (the time until which data has been produced by the source software component). Data elements are marked with an algorithmic time $s_i$ and can be appended to a connector because of scheduling of the source software component at the source side of the connector. Scheduling the source software component also updates the produced-until time for the specific connector. The software component at the sink side of the connector can remove data elements when it is scheduled, by processing the data elements. For each software component a current time box is defined, the time box has a begin time and an end time. In order to schedule a software component the time-box has to be full for all connectors at the input of the software component, meaning that all data elements with time stamps $s_i$ in the time interval between the begin time and the end time of the time-box, are ready/present, or in other words the produced-until time is newer than the end time of the current time box.

Figure 2 explains in general steps the process of defining scheduleability of software components and executing a scheduled software component. The process comprises the steps of assigning a time-box to each connector of the software component and executing the scheduled software component. In 201, a current time-box is assigned to the software component. This is done by defining a begin time and an end time of a time interval of the next data elements to be processed by the software component. The scheduler could e.g. perform the assigning of a current time-box. When the data elements on a specific connector are ready, meaning that the data elements have been processed by the source software component, the data within the current time-box are ready. The current time-box has to be full for each input connector of a software component, in order for a software component to be schedulable. In 203, the software component has been scheduled and the data elements at all connectors, which lie within the bounds of the current time-box, are consumed and processed by the software component. The processed data elements are now ready at the output of the software component and the produced-until time $sp_c$ for each output connector is updated. In 201, a new current time-box is assigned to the software component. This is done by defining a new begin time equalling the end time of the previous time-box for the software component.

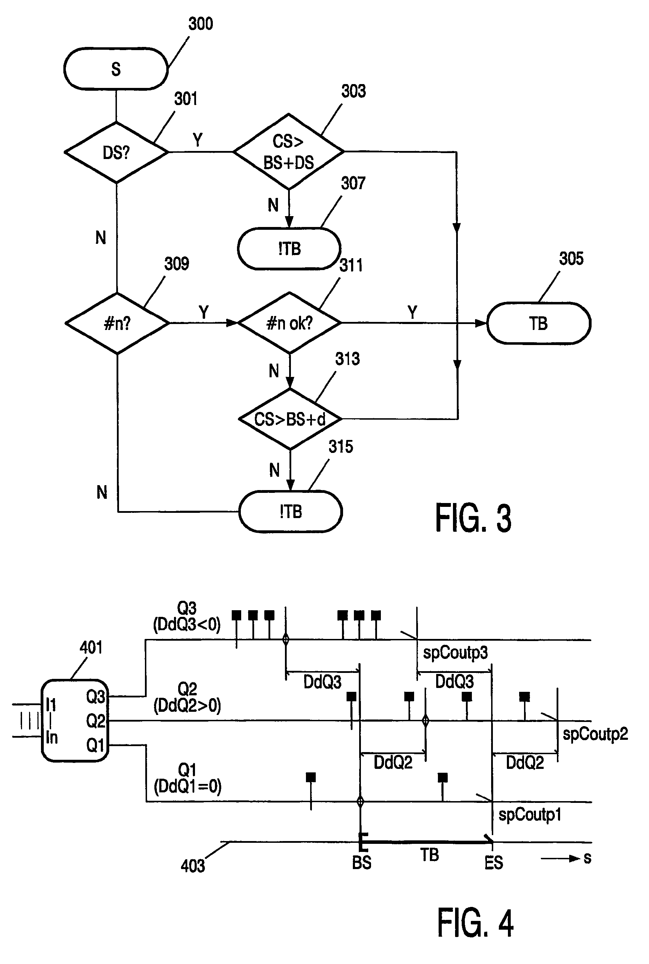

Figure 3 is a flow diagram illustrating how it is decided whether it is possible to assign a current time box for a specific software component. The decision can be made according to two scenarios depending on the type of software component. The first type is a $\Delta s$ software component and the second type is a #n software component. If the software component is a $\Delta s$ software component 301, then it is checked 303 whether the current algorithmic time CS is larger than the begin time BS of the current time box being added a predefined time interval $\Delta s$ being the length of a time box. The begin time of the current time box equals the end time of the previous time box. If this is true then the time box can be defined and assigned the software component 305, if this is false no time-box !TB can be defined and assigned 307 as sufficient time have not yet passed since the software component last processed data elements in a time-box. When the software component is a #n software component 309, then it is first checked 311 whether there is a predefined number of data elements available on a specific connector #n connector. If this is true then the time box TB can be defined 305 where the begin time is the end time of the previous time-box and the end time is the time stamp of the newest data element available at the specific connector. If it is not true it is checked 313 whether the current algorithmic time is larger than a begin time of a current time box added a displacement value d. If this is true then the data elements are ready and the time box can be defined 305, if this is false no time-box !TB can be defined as there are not sufficient data elements present yet at the n'th connector. In general $\Delta s$ software components will be able to deal with slightly varying amount of data in their current time-box, while #n-software components will take the same amount of data from the input that is specified as the #n connector.

In an embodiment the current time box assigned a software component might be displaced in time for each connector as illustrated in figure 4. In 401, 1 a software component is illustrated having a number of inputs (I1..In) and three outputs (Q1, Q2, Q3). A time-box TB is assigned to the software component having a begin time BS and an end time ES as shown by 403. In this example output Q1 has no displacement; Q2 has a positive displacement and Q3 a negative one. The produced-until time for a certain output connector is linked directly to the end-time of the time box by adding the output's displacement:

$$sp_{cQ} = ES(TB) + \Delta dQ$$

where CQ is the connector attached to output Q of the software component, $sp_{CQ}$ produced-until time of connector CQ, ES(TB) end time of time box TB with which the software component 401 was scheduled and $\Delta dQ$ is the displacement of output Q of the software component.

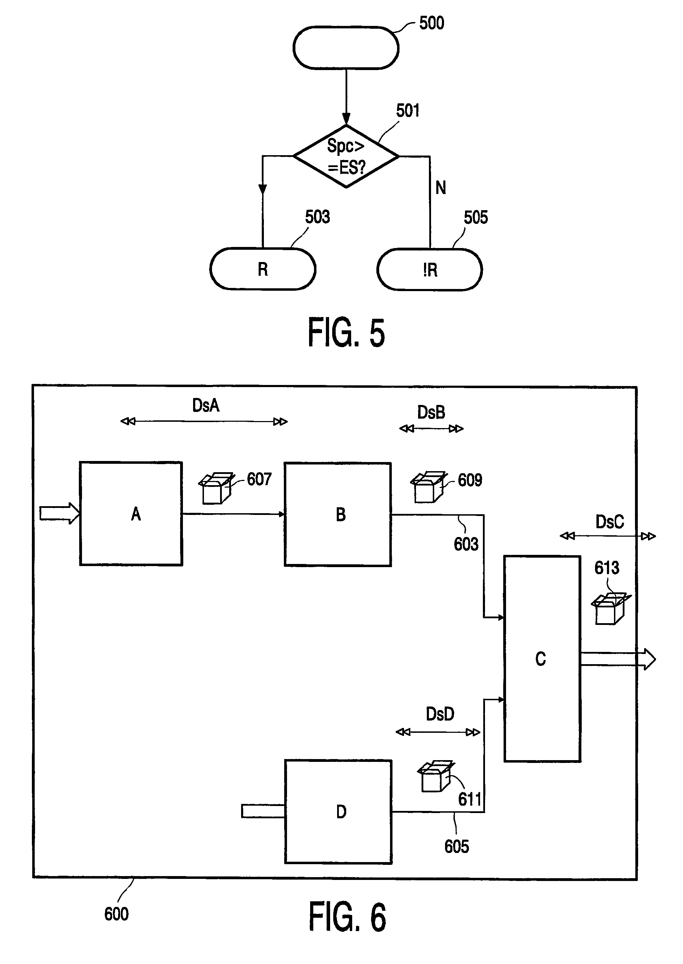

Using figure 5 it is described how the scheduler uses the time-boxes when determining scheduleability of software components. The scheduleability is determined by checking each input connector of the software component and if the produced until time $sp_c$ for the connector is equal or larger than the end time ES of the time-box of the software component, then this connector makes the software component qualified to be scheduled 503. Otherwise the software component is not ready to be scheduled 505. As mentioned earlier, each input connector of a software component has to qualify in order to qualify the software component to be scheduled.

It has been described how a software component becomes schedulable according to time box driven scheduling and in the following it will be described how to select a software component to be scheduled according to an embodiment of the present invention and how the schedulable software components are ordered in a flexible priority scheme.

All schedulable software components get a flexible priority being based on the point in time that scheduling the software component may contribute to an output and the highest priority is given to the software component that may contribute the earliest to an output. After each step the set of schedulable software components is updated and the priorities of the schedulable software components are re-computed. The data is thereby pulled through the graph, where software components that contribute earlier to the end result are treated first. If more than one software component has highest priority, the push scheduling is applied to them.

One method of calculating the earliest moment in time that a certain software component might contribute to the output is by using the path from the software component to the output and then calculating the earliest moment in time as the begin time of the new time box subtracted by the time length of all time boxes on the path from the software component to the output. By performing this calculation the earliest possible time is calculated. It is supposed that the first time stamped data element in a time box being processed when a software component is scheduled, equals a missing time stamped data element in a time box for the next software component in the path. The presumption is performed for each software component in the path to the output whereby the earliest moment in time that the software component might contribute to the output can be found.

When a number of software components are schedulable the following formula is used to find which software component can contribute to the output at the earliest time and thereby which software component to schedule:

$$\text{Min } \{spX - \Delta sXp \mid p \text{ is a path from software component } X \text{ to an output}\}$$

$spX$ is the produced until time of software component X equalling the begin time of the current time box of software component X and $\Delta sXp$ is the sum of the lengths of each predefined time interval associated with each time-box of the software components in the path p from software component X to the output. In a specific embodiment there might be a time delay and thereby a time displacement in a connection between two or more software components in the path. In this case the total displacement $\Delta dXp$ along the path p should be subtracted as below:

$$\text{Min } \{spX - (\Delta sXp - \Delta dXp)\}$$

In case two software components should be scheduled according to the above, meaning that scheduling these two software components could contribute to an output at the same earliest time, then pull scheduling is used to determine which software component to schedule.

In figure 6 an example of a hard real time system is illustrated being used for explaining the scheduling of schedulable software components in the system according to the above. The system consists of 4 software components A, B, C and D all being $\Delta s$ software components, where software component A is an input software component connected via a connector 601 to software component B, software component B is connected via a connector 603 to software component C, being an output software component, and software component D is an input software component being connected via a connector 605 to the output software component C. At each connector time-boxes 607, 609, 611 and 613 are illustrated, and together with each time-box time intervals $\Delta sA$, $\Delta sB$, $\Delta sC$, $\Delta sD$ are shown illustrating the length of the predefined time interval associated with each time-box. The input software components A and D receive a constant stream of data and therefore sufficient data elements are always present to fill the time-box 607 and the time-box 611. This also means that software component A and D are always schedulable.

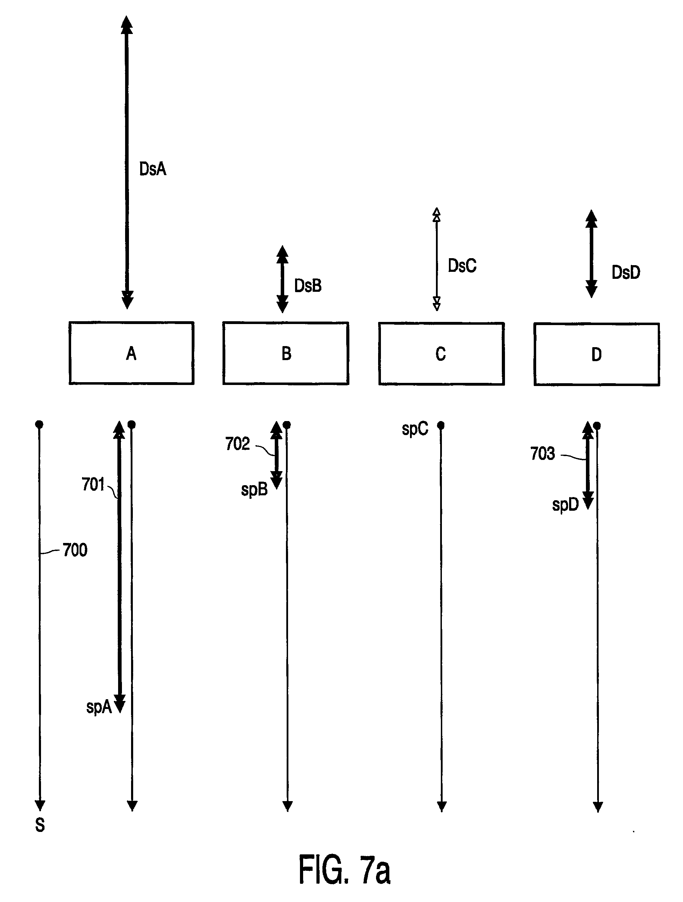

In the following, scheduling of the software components A, B, C and D are explained using the figures 7a-7f. In all figures each software component A, B, C and D is shown together with the time interval $\Delta sA$, $\Delta sB$, $\Delta sC$, $\Delta sD$ of the predefined time interval associated to the software components A, B, C and D. Further, a time line 700 illustrates the algorithmic time s, and for each software component A, B, C, D the produced until time is shown as respectively spA, spB, spC and spD, and according to the general properties of time box scheduling the produced until time for each software component equals the begin time of the current time box associated with the software component. Initially, the begin time of all time boxes is the same and is marked as a dot.

In figure 7a, software component A has been scheduled initially, both A and D were schedulable and by using push scheduling A was chosen.

Data elements in the time interval 701 have been processed by software component A and the produced until time spA has increased. After having scheduled software component A sufficient data are available to schedule software component A, software component B and software component D. Which software component to schedule is determined by the calculations resulting in the minimum number or earliest time:

Software component A: spA - (∆sB + ∆sC)
Software component B: spB - ∆sC
Software component D: spD - ∆sC

In this case both B and D can contribute to the output at the same earliest time and therefore push scheduling is used and Software component B is scheduled.

After having scheduled software component B illustrated by the time interval 702 at the time axis of B, the produced until time spB increases. Sufficient data are available to schedule software component A, software component B and software component D. Which software component to schedule is determined by the calculations resulting in the minimum number or earliest time:

Software component A: spA - (∆sB + ∆sC)
Software component B: spB - ∆sC
Software component D: spD - ∆sC

Software component D can contribute to the output at the earliest time and therefore software component D is scheduled as illustrated by the time interval 703. At the time axis of D the produced until time spD increases.

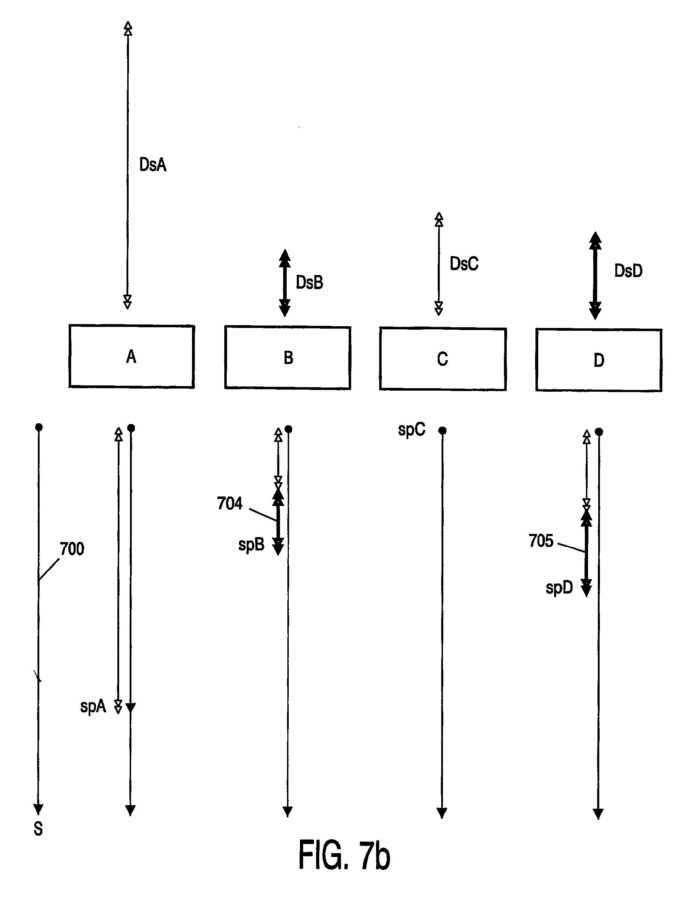

In figure 7b sufficient data are still only available to schedule software component A, B and D. Which software component to schedule is determined by the calculations resulting in the minimum number or earliest time:

Software component A: spA - (∆sB + ∆sC)
Software component B: spB - ∆sC
Software component D: spD - ∆sC

This time software component B can contribute to the output at the earliest time and therefore software component B is scheduled as illustrated by the time interval 704.

Then again software component A, B and D can be scheduled and by using the above calculations software component D is scheduled again as illustrated by the time interval 705.

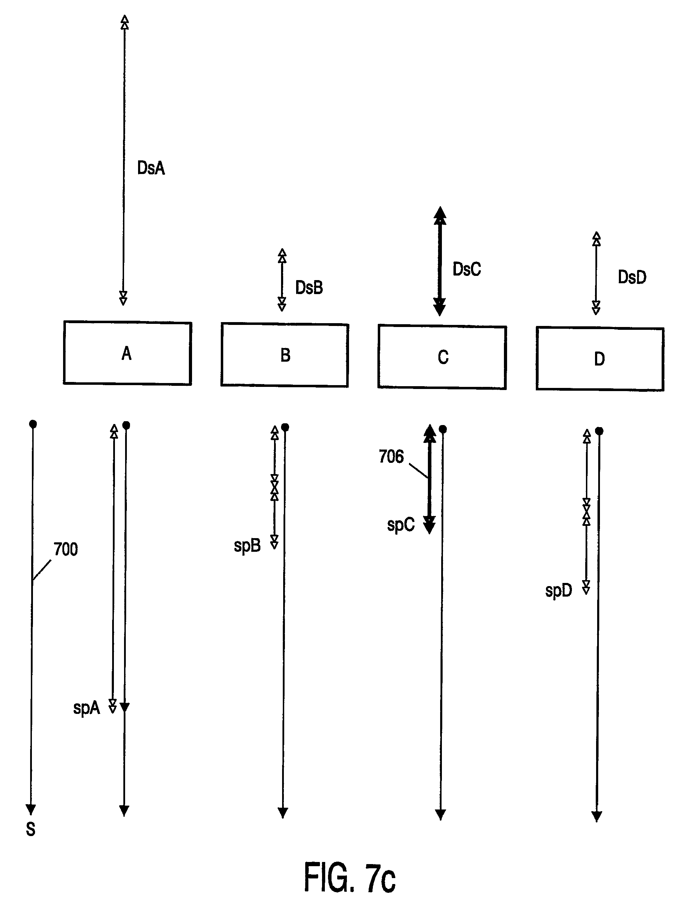

As illustrated in figure 7c sufficient data are now available to schedule software component C and therefore both software component A, B, C and D are schedulable. Which software component to schedule is determined by the calculations resulting in the minimum number or earliest time:

Software component A: spA - (∆sB + ∆sC)
Software component B: spB - ∆sC
Software component D: spD - ∆sC
Software component C: spC

Software component C can contribute to the output at the earliest time and therefore software component C is scheduled as illustrated by the time interval 706.

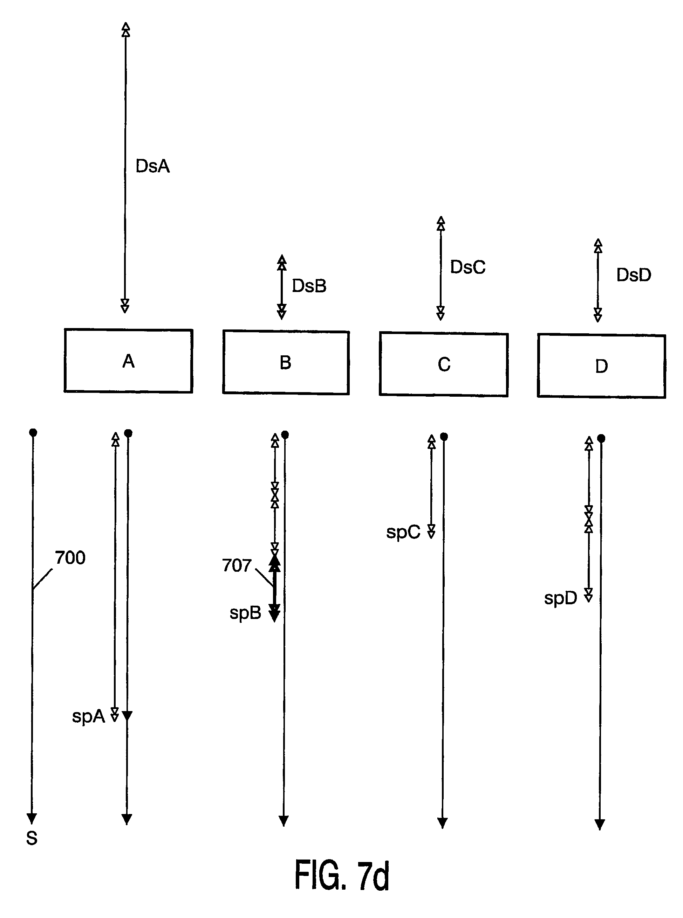

As seen from figure 7d, sufficient data are now only available to schedule software component A, B and D making those software components schedulable. Which software component to schedule is determined by the calculations resulting in the minimum number or earliest time:

Software component A: spA - (∆sB + ∆sC)
Software component B: spB - ∆sC
Software component D: spD - ∆sC

Software component B can contribute to the output at the earliest time and therefore software component B is scheduled as illustrated by the time interval 707.

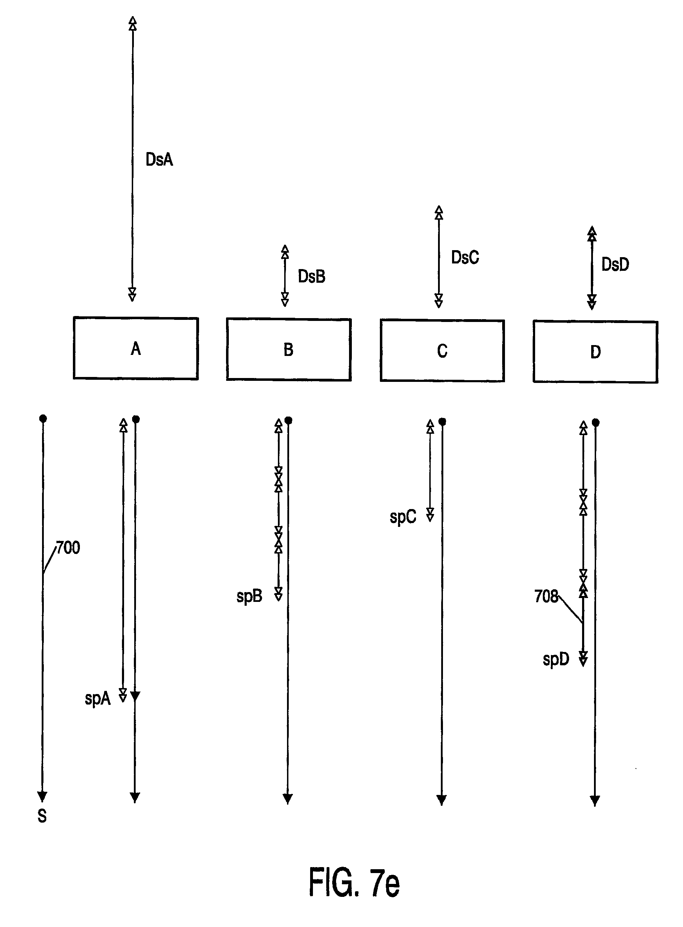

In figure 7e, sufficient data are available to schedule software component A, B and D making those software components schedulable. Which software component to schedule is determined by the calculations resulting in the minimum number or earliest time:

Software component A: spA - (∆sB + ∆sC)
Software component B: spB - ∆sC
Software component D: spC - ∆sC

Software component D can contribute to the output at the earliest time and therefore software component D is scheduled as illustrated by the time interval 708.

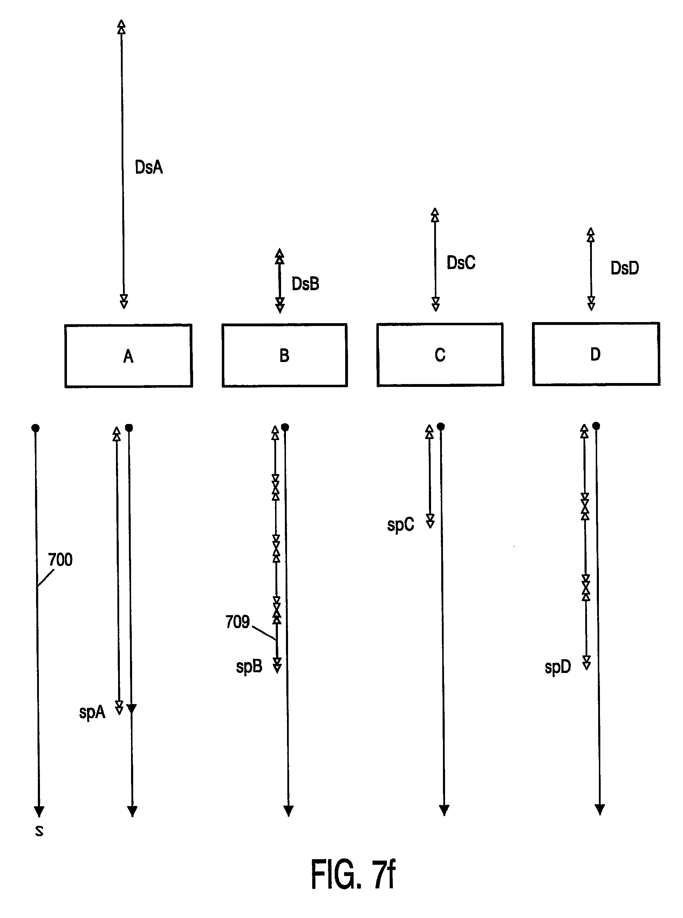

In figure 7f, sufficient data are available to schedule software component A, B and D making those software components schedulable. Which software component to schedule is determined by the calculations resulting in the minimum number or earliest time:

Software component A: spA - ($\Delta$sB + $\Delta$sC)
Software component B: spB - $\Delta$sC
Software component D: spD - $\Delta$sC

Software component B can contribute to the output at the earliest time and therefore software component B is scheduled as illustrated by the time interval 709.

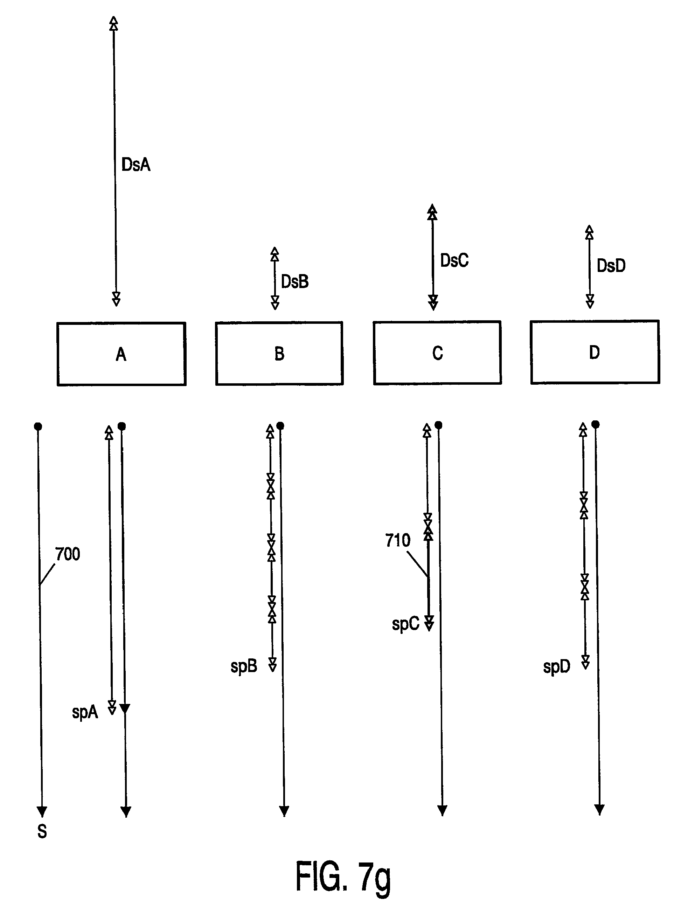

As illustrated in figure 7g sufficient data are now available to schedule software component C and therefore both software component A, B, C and D are schedulable. Which software component to schedule is determined by the calculations resulting in the minimum number or earliest time:

Software component A: SpA - ($\Delta$sB + $\Delta$sC)
Software component B: SpB - $\Delta$sC
Software component D: SpD - $\Delta$sC
Software component C: SpC

Software component C can contribute to the output at the earliest time and therefore software component C is scheduled as illustrated by the time interval 710.

The scheduling can continue similar to the above.

## Claims

1. A method of scheduling schedulable software components (101,103) in a hard real time system (600) for processing time dependent streams of data elements, where the number of schedulable software components is larger than the number of available processors for processing said software components and where each of said software components has at least one input and one output **characterized in that** the method comprises the steps of consecutively:

    - determining for each schedulable software component the earliest time on which said software component can contribute to the output of said hard real time system,
    - scheduling the schedulable software component that can contribute to the output of said real time system at the earliest of the earliest times.

2. A method according to claim 1, wherein if a number of schedulable software components contribute to the output of said real time system at the same earliest of the earliest times, then scheduling of said number of software components is performed using push scheduling.

3. A method according to claim 1 or 2, wherein a predefined time interval is specified for each software component and a software component is schedulable when all time stamped data elements from said predefined time interval of said time dependent stream of time stamped data element is available at all inputs of said software component.

4. A method according to claim 3, wherein the availability of said predefined time interval of said time stamped data elements is determined by defining a begin time and an end time of said predefined time interval and checking whether the most recent time stamped element processed by a preceding software component is newer than the end time of said predefined time interval.

5. A method according to claim 3 or 4 wherein the step of determining the earliest time on which said software component can contribute to the output is performed by:

    - identifying possible paths of subsequent software components that the data elements have to be processed by in order to reach the output of said system from said software component,
    - determining an earliest contribution time for each possible path by subtracting from the begin time of said predefined time interval the length of each of the predefined time intervals specified for each of said subsequent software components in said path.

- determining the earliest time on which said software component can contribute to the output as the earliest determined contribution time.

**6.** A method according to claim 3 or 4, wherein the step of determining the earliest time on which said software component can contribute to the output is performed by:

- identifying a path of subsequent software components that the data elements have to be processed by in order to reach the output of said system from said software component,
- determining an earliest contribution time for each possible path by subtracting from the begin time of said predefined time interval, the length of each of the predefined time intervals specified for each of said subsequent software components in said path, where at least some of said predefined time intervals have been subtracted a displacement value.
- determining the earliest time on which said software component can contribute to the output as the earliest determined contribution time.

**7.** A hard real time system (600) for processing time dependent streams of data elements, said system comprising a number of software components (101,103) and a number of processors for processing software components, said number of software components is larger than the number of processors, each of said software components having at least one input and at least one output, **characterized in that** said system comprises means for determining for each schedulable software component the earliest time on which said software component can contribute to the output of said hard real time system, and means for scheduling the schedulable software component that can contribute to the output of said real time system at the earliest of the earliest times.

**Patentansprüche**

**1.** Verfahren zur Zeitsteuerung in der Zeit steuerbarer Software-Elemente (101, 103) in einem Hart-Echtzeitsystem (600) zum verarbeiten zeitabhängiger Ströme von Datenelementen, wobei die Anzahl in der Zeit steuerbarer Software-Elemente größer ist als die Anzahl verfügbarer Prozessoren zum Verarbeiten der genannten Software-Elemente und wobei jedes der genannten Software-Elemente wenigstens einen Eingang und einen Ausgang hat, **dadurch gekennzeichnet, dass** das Verfahren die nachfolgenden Verfahrensschritte umfasst:

- das Ermitteln des frühesten Zeitpunktes, wo das genannte Software-Element einen Beitrag zum Ausgang des genannten Hart-Echtzeitsystems liefern kann, und zwar für jedes in der Zeit steuerbaren Software-Element,
- das in der Zeit Steuern des steuerbaren Software-Elementes, das von den frühesten Zeitpunkten als allererstes einen Beitrag zu dem Ausgang des genannten Echtzeitsystems liefern kann.

**2.** Verfahren nach Anspruch 1, wobei, wenn eine Anzahl in der Zeit steuerbarer Software-Elemente zu demselben frühesten Zeitpunkt der frühesten Zeitpunkte einen Beitrag zu dem Ausgang des genannten Echtzeitsystems liefern, die Zeitsteuerung der genannten Anzahl Software-Elemente unter Anwendung von Push-Zeitsteuerung durchgeführt wird.

**3.** Verfahren nach Anspruch 1 oder 2, wobei ein vorbestimmtes Zeitintervall für jedes Software-Element spezifiziert ist und ein Software-Element geplant wird, wenn alle zeitmarkierten Datenelemente aus dem genannten vorbestimmten Zeitintervall des genannten zeitabhängigen Stromes zeitmarkierter Datenelemente an allen Eingängen des genannten Software-Elementes verfügbar sind.

**4.** Verfahren nach Anspruch 3, wobei die Verfügbarkeit des genannten vorher definierten Zeitintervalls der genannten zeitmarkierten Datenelemente durch Definition einer Anfangszeit und einer Endzeit des genannten vorher definierten Zeitintervalls und durch Überprüfung, ob das jüngste zeitmarkierte von einem vorhergehenden Software-Element verarbeitete Element jünger ist als die Endzeit des genannten vorher definierten Zeitintervalls, ermittelt wird.

**5.** Verfahren nach Anspruch 3 oder 4, wobei der Schritt der Ermittlung des frühesten Zeitpunktes, wo das genannte Software-Element einen Beitrag zu dem Ausgang liefern kann, durch die nachfolgenden Vorgänge durchgeführt wird:

- Identifikation möglicher Strecken nachfolgender Software-Elemente, von denen die Datenelemente verarbeitet werden sollen, damit der Ausgang des genannten Systems von dem Software-Element erreicht wird,

- Ermittlung eines frühesten Beitragszeitpunktes für jede mögliche Strecke durch Subtraktion der Länge jedes der vorher definierten Zeitintervalls, spezifiziert für jedes der genannten nachfolgenden Software-Elemente in der genannten Strecke von der Anfangszeit des genannten vorher definierten Zeitintervalls,
- Ermittlung des frühesten Zeitpunktes, wo das genannte Software-Element einen Beitrag zu dem Ausgang liefern kann, und zwar als die früheste ermittelte Beitragszeit.

**6.** Verfahren nach Anspruch 3 oder 4, wobei der Schritt der Ermittlung des frühesten Zeitpunktes, wo das genannte Software-Element zu dem Ausgang beitragen kann, durch die nachfolgenden Vorgänge durchgeführt wird:

- Identifikation einer Strecke nachfolgender Software-Elemente, von denen die Datenelemente verarbeitet werden sollen, damit der Ausgang des genannten Systems von dem genannten Software-Element erreicht wird,
- Ermittlung einer frühesten Beitragszeit für jede mögliche Strecke durch Subtraktion der Länge jeder der vorher definierten Zeitintervalle, spezifiziert für jedes der genannten nachfolgenden Software-Elemente in der genannten Strecke von der Anfangszeit des genannten vorher definierten Zeitintervalls, wobei wenigstens einige der genannten vorher definierten Zeitintervalle um einen Verlagerungswert subtrahiert worden sind,
- Ermittlung des frühesten Zeitpunktes, wo das genannte Software-Element zu dem Ausgang als die früheste ermittelte Beitragszeit beitragen kann.

**7.** Hartes Echtzeitsystem (600) zum Verarbeiten zeitabhängiger Ströme von Datenelementen, wobei das genannte System eine Anzahl Software-Elemente (101, 103) und eine Anzahl Prozessoren zum Verarbeiten von Software-Elementen aufweist, wobei die genannte Anzahl Software-Elemente größer ist als die Anzahl Prozessoren, wobei jedes der genannten Software-Elemente wenigstens einen Eingang und wenigstens einen Ausgang aufweist, **dadurch gekennzeichnet, dass** das genannte System Mittel aufweist um für jedes zeitlich steuerbares Software-Element den frühesten Zeitpunkt zu ermitteln, wo das genannte Software-Element zu dem Ausgang des genannten harten Echtzeitsystem beitragen kann, und Mittel zur Zeitsteuerung des zeitlich steuerbaren Software-Elementes, das zu dem Ausgang des genannten Echtzeitsystems zu dem frühesten Zeitpunkt der frühesten Zeitpunkte beitragen kann.

## Revendications

**1.** Procédé de programmation de composants logiciels programmables (101, 103) dans un système dur en temps réel (600) pour traiter les flux dépendant de temps d'éléments de données où le nombre de composants logiciels programmables est supérieur au nombre de processeurs disponibles pour traiter lesdits composants logiciels et où chacun desdits composants logiciels présente au moins une entrée et une sortie, **caractérisé en ce que** le procédé comprend les étapes consécutives suivantes consistant à:

- déterminer pour chaque composant logiciel programmable le temps le plus court où ledit composant logiciel peut contribuer à la sortie dudit système dur en temps réel,
- programmer le composant logiciel programmable qui peut contribuer à la sortie dudit système en temps réel au temps le plus court des temps les plus courts.

**2.** Procédé selon la revendication 1, dans lequel, si un certain nombre de composants logiciels programmables contribuent à la sortie dudit système en temps réel au même temps le plus court des temps les plus courts, alors la programmation dudit nombre de composants logiciels est effectuée à l'aide de la programmation de poussée.

**3.** Procédé selon la revendication 1 ou 2, dans lequel un intervalle prédéfini de temps est spécifié pour chaque composant logiciel et dans lequel un composant logiciel est programmable lorsque tous les éléments de données horodatés en provenance dudit intervalle prédéfini de temps dudit flux dépendant de temps de l'élément de données horodaté sont disponibles à toutes les entrées dudit composant logiciel.

**4.** Procédé selon la revendication 3, dans lequel la disponibilité dudit intervalle prédéfini de temps desdits éléments de données horodatés est déterminée lorsqu'on définit un temps de début et un temps de fin dudit intervalle prédéfini de temps et lorsqu'on contrôle si l'élément horodaté le plus récent qui est traité par un composant logiciel précédent est plus neuf que le temps de fin dudit intervalle prédéfini de temps.

**5.** Procédé selon la revendication 3 ou 4, dans lequel l'étape consistant à déterminer le temps le plus court où ledit composant logiciel peut contribuer à la sortie est effectuée par les étapes suivantes consistant à:

- identifier les trajets possibles de composants logiciels subséquents par lesquels les éléments de données doivent être traités afin d'atteindre la sortie dudit système à partir dudit composant logiciel,
- déterminer un temps le plus court de contribution pour chaque trajet possible en soustrayant au temps de début dudit intervalle prédéfini de temps la longueur de chacun des intervalles prédéfinis de temps qui sont spécifiés pour chacun desdits composants logiciels subséquents dans ledit trajet,
- déterminer le temps le plus court où ledit composant logiciel peut contribuer à la sortie en tant que le temps déterminé le plus court de contribution.

6. Procédé selon la revendication 3 ou 4, dans lequel l'étape consistant à déterminer le temps le plus court où ledit composant logiciel peut contribuer à la sortie est effectuée par les étapes suivantes consistant à:

- déterminer un trajet de composants logiciels subséquents par lesquels les éléments de données doivent être traités afin d'atteindre la sortie dudit système à partir dudit composant logiciel,
- déterminer un temps le plus court de contribution pour chaque trajet possible en soustrayant au temps de début dudit intervalle prédéfini de temps la longueur de chacun des intervalles prédéfinis de temps qui sont spécifiés pour chacun desdits composants logiciels subséquents dans ledit trajet où au moins quelques-uns desdits intervalles prédéfinis de temps ont été soustrait à une valeur de déplacement,
- déterminer le temps le plus court où ledit composant logiciel peut contribuer à la sortie en tant que le temps déterminé le plus court de contribution.

7. Système dur en temps réel (600) pour traiter les flux dépendant de temps d'éléments de données, ledit système comprenant un certain nombre de composants logiciels (101, 103) et un certain nombre de processeurs pour traiter les composants logiciels, ledit nombre de composants logiciels est supérieur au nombre de processeurs, chacun desdits composants logiciels ayant au moins une entrée et au moins une sortie, **caractérisé en ce que** ledit système comprend des moyens pour déterminer pour chaque composant logiciel programmable le temps le plus court où ledit composant logiciel peut contribuer à la sortie dudit système dur en temps réel et des moyens pour programmer le composant logiciel programmable qui peut contribuer à la sortie dudit système en temps réel au temps le plus court des temps les plus courts.

EP 1 573 537 B1

FIG. 1

FIG. 2

12

FIG. 3

FIG. 4

FIG. 5

FIG. 6

DsA

DsB

DsC

DsD

A

B

C

D

spC

701

700

702

spB

703

spD

spA

S

FIG. 7a

DsA

DsC

DsB

DsD

A

B

C

D

spC

704

spB

705

spD

700

spA

S

FIG. 7b

DsA

DsB

DsC

DsD

A

B

C

D

706

spA

spB

spC

spD

700

S

FIG. 7c

FIG. 7d

DsA

DsC

DsB

DsD

A

B

C

D

700

spA

spB

spC

708

spD

S

FIG. 7e

DsA

DsB

DsC

DsD

| A | B | C | D |

700

709

spA

spB

spC

spD

S

FIG. 7f

DsA

DsB

DsC

DsD

| A | B | C | D |

700

710

spA

spB

spC

spD

S

FIG. 7g

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020062435 A
- US 6195701 B
- US 7140016 B

### Non-patent literature cited in the description

- time capsules: an abstraction for access to continuous media data. proceedings of the real-time systems symposium. IEEE Comp.Soc.Press, 05 December 1990, vol. SYMP. 11, 11-20
- Modelling heterogenous process scheduling for real-time systems. **LEATHRUM J.F. et al.** Robotics and Computer Integrated Manufacturing. Elsevier Science Publishers, June 1994, vol. 11, 91-98
- Task scheduling policies for real-time systems. **KO-ROUSIC-SELJAK B.** Microprocessors and Microsystems. IPC Business Press Ltd, 01 November 1994, vol. 18, 501-511